# EUROPEAN PATENT APPLICATION

(11) **EP 3 012 450 A1**
(43) Date of publication of application: **27.04.2016**
(21) Application number: 15002606.0
(22) Date of filing: 04.09.2015
(51) Int. Cl.: F03D 15/00, F03D 1/06, F03D 3/06

(54) **VERTICAL AXIS AND HORIZONTAL AXIS WIND TURBINE POWER TRANSMISSION SYSTEM**

(30) Priority: 05.09.2014 IT NA20140033
(71) Applicant: C.E.P.A. Euro Company Programs Africa S.r.l., 81031 Aversa (CE) (IT)
(72) Inventor: Zinni, Vito, 81031 Aversa, Caserta (IT)

(57) **Abstract**

The scope of the invention is aimed at the realization of a Transmission System of Driving Force induced by the Wind Rotor (B) and (C) and transmitted to the generating machine (Alternator) (1) applicable to:
- Vertical Axis Wind turbines (VAWTG - Vertical Axis Wind Turbine Generator), below for brevity "VAWTG" (Fig. 1).
- Windmills to Horizontal Axis (HAWTG, Horizontal Axis Wind Turbines Generator), below for brevity "HAWTG" (Fig. 4).

The novelty and innovation of the "Transmission System of Driving Force for Vertical and Horizontal Axis Wind Turbine Generator" (hereafter for brevity also called a "Transmission System") is that it allows you to relocate to the ground all the components, except the Wind Rotor (B) and (C), compared to their usual position in the head at the Tower (2), making a number of advantages better described below.

The "Transmission System of Driving Force for Vertical and Horizontal Axis Wind Turbine Generator" object of the present invention, is characterized by:
- Easy to install.
- Reproducibility in industry.
- Increased safety due to increased static infrastructure by reducing the weight according to the new placement of heavy components placed at the base of the tower.
- Smaller foundations and therefore less land use, less concrete and less metal structural work to the benefit of the environment and greater savings.
- Use of support towers less robust to the advantage of a greater saving.
- Architectural integration with Tower (2) of support which passes through the Rotating Cylinder (3) (only on technology VAWTG) (Fig. 1 and 2).
- Reduced vibration and fanning effect thanks to Rotating Cylinder (3) which houses the Tower's (2) support, allowing the kinetic energy of download perfectly towards the center, thus reducing the stress resilience (only on technology VAWTG) (Fig. 1 and 2).
- Reducing visual impact thanks to the volume reduction of encumbrances on the head of the pole (2).
- Drive more sensitlve (cut-in) with winds of low intensity.
- Increased production thanks to the Chain of Transmission of Motive Power (4) that allows start up empty of Wind Rotor (B) and (C), allowing charging of kinetic energy so that the torque can easily overcome the resistance of energy mechanical and electrical opposite from the machine generating electromagnetic Induction (Alternator) (1)

This Transmission System, as well as the advantages listed above, allows to employ generating machine (Alternator) (1) of greater power with equal area swept by the wind rotor (B) and (C) and to obtain a power curve more abrupt passing from the state of the start up to the maximum power in the shortest possible time, also thanks to the acceleration induced by the Spring Steel (5) by means of elastic energy which it absorbed in the start-up phase and released once the torque has exceeded the strength of the mechanical energy and electrical opposite from the generating machine (Alternator) (1).

## Description

The Invention disclosed in this patent is based on the realization of a "Transmission System of Driving Force for Vertical and Horizontal Axis Wind Turbine Generetor".

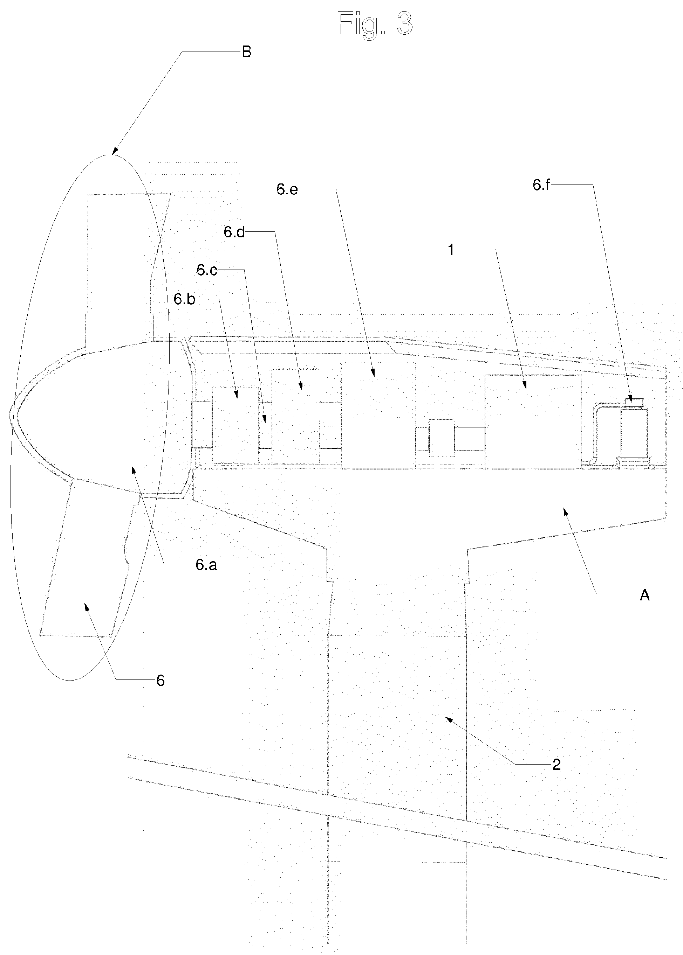

Currently for great size horizontal axis windmills (HAWTG) the manufacturers employing a transmission line rigidly connected between the Wind Rotor (B), the Braking System (6.d), the System Gearbox (Gear Transmission Box) (6.e) and the machine generating electricity (Alternator) (1) connected In turn to a Current Transformer (6.f), as represented in Fig. 3.

These five components (Rotor Wind Power (B), Brake System (6.d), System Multiply Spins (6.e), Alternator (1) and Current Transformer (6.f)) are all mounted on top of a the tower (2) within a nacelle (a) also called "Gondola". This system represent a big problem from static and structural point of view because of the weight of the components, placed several meters from the ground, so much so that to support them Is necessary to set up complex and expensive interventions for the realization of massive foundations and sturdy masts. The disadvantage of this configuration is also reflected in phase of operation of the installations, in particular for maintenance that are held at several meters from the ground and which require the use of men and special means which lead to higher costs and maintenance Increase the time of downtime, resulting in loss of production, in addition to exhibiting the specialist staff at a high risk,

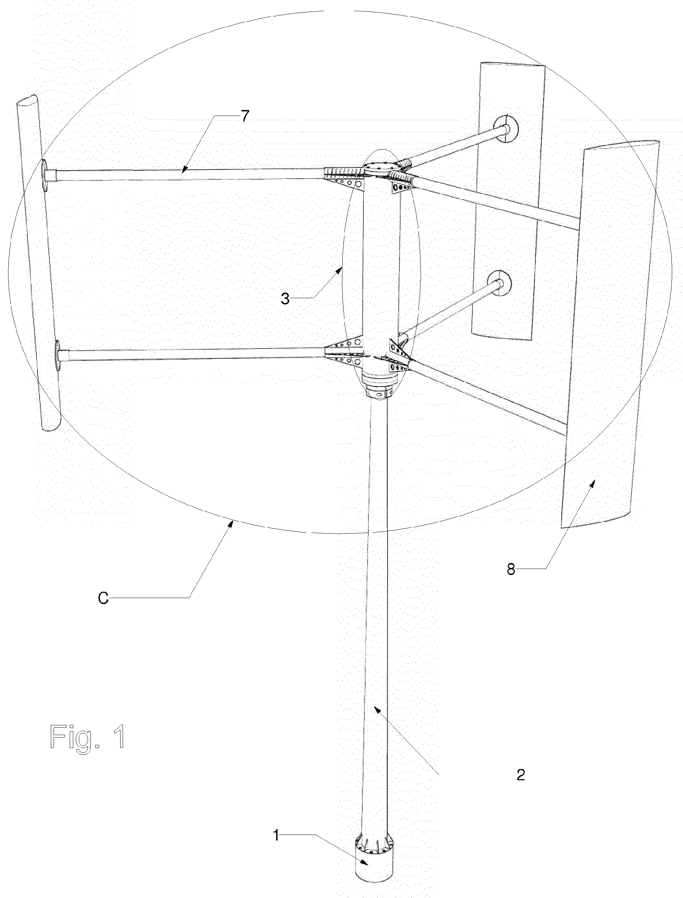

Some windmills manufacturers both Vertical Axis (VAWTG) that Horizontal Axis (HAWTG) are moving towards direct drive technology that allows you to mount on the tower's head (2) only the Wind Rotor (B) and (C) and Generator (Alternator) (1) but this last alone is the greater weight of the whole rotating system. The Transmission System object of the present patent overturns this modus operandi adopted yet leaving on the head of the Tower (2) only and exclusively the Wind Rotor (B) and (C), bringing all the other components on the ground at the base of the Tower (2), as illustrated in Figures 1, 2, 4, 5 and 6.

In particular, in Fig. 1 is depicted with an axonometric view of the architecture of the Vertical Axis Wind Turbine (VAWTG) on which is mounted the transmission system object of the present patent: the Generator (Alternator) (1) is positioned at the base of the Tower (2), while on the head of the Tower (2) is placed only the Vertical Axis Wind Rotor (C); the latter Is constituted by the Rotating Cylinder (3), by Arms (7) and the Airfoils (8).

In Fig. 2, it Is depicted with a cross-section a detailed frontal view of the architecture of the Transmission System applied to the Vertical Axis Wind Turbine (VAWTG).

In Fig. 3 is depicted with section, state of the modus operandi adopted by far by the largest players.

In Fig. 4 is depicted with axonometric view the architecture of the Horizontal Axis Wind Turbine (HAWTG) on which the Transmission System object of the present patent is mounted: the Generator (Alternator) (1) is positioned at the base of the Tower (2) while on the Tower's head (2) is placed only the Horizontal Axis Wind Rotor with (B) attached to the Nacelle (A).

In Fig. 5, It Is depicted with a cross-section a detailed frontal view of the architecture of the Transmission System applied to Horizontal Axis Wined Turbine (HAWTG).

In Fig. 6, is depicted with a cross-section a detailed frontal view of the architecture of the Transmission System applicable to Horizontal Axis (HAWTG) that those Vertical Axis Wind Turbine (VAWTG) which use the Braking System (6.d) the Spin Multiplier (6.e), the Alternator (1) and the Current Transformer (6.f), all encased in a Box (D) at the base of the Tower (2).

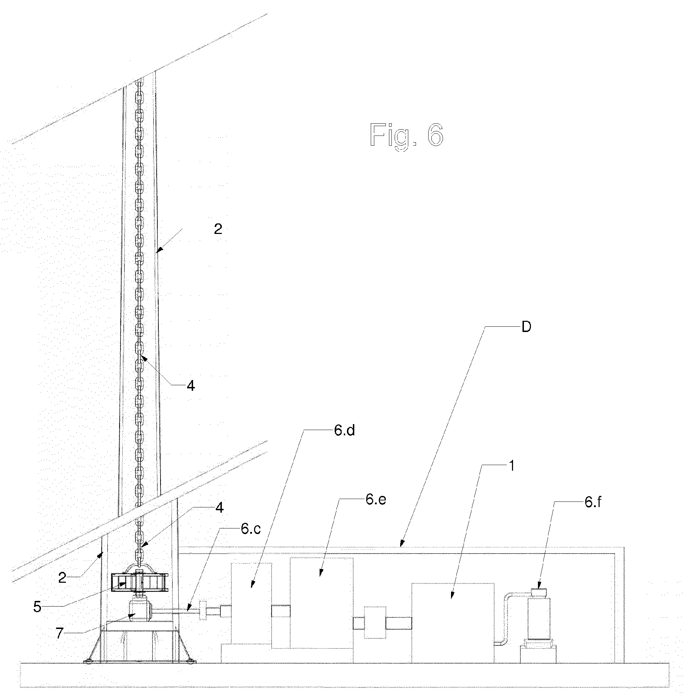

The "Transmission System of Driving Force for Vertical and Horizontal Axis Wind Turbine Generator" Is applicable to all windmills both Horizontal Axis (HAWTG) that Vertical Axis (VAWTG) of any power, both to those who use technology direct drive technology (Figures 1, 2, 4 and 5) than to those that use the Gearbox (Transmission Gear Box) Fig. 6.

With the help of the drawings we will see In detail how is formed the "Transmission System of Driving Force for Vertical and Horizontal Axis Wind Turbine Generator", how It works and what benefits It brings.

We will start in describing the system applied to the Vertical Axis Windmills (VAWTG), and then describe the system applied to Horizontal Axis Windmills (HAWTG).

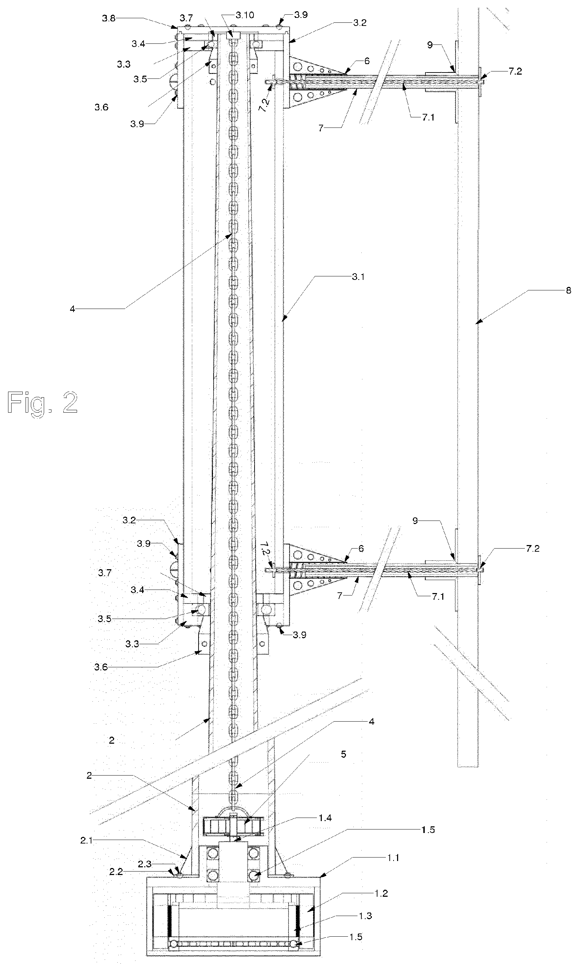

For installations on Vertical Axis Wind Turbine (VAWTG), the Transmission System object of this patent Is shown in Figures 1 and 2 and is constituted by a Rotating Cylinder (3), a Range Transmission of Driving Force (4) and a Steel spring (5). The Rotating Cylinder (3) is composed of:
- Cylindrical Spacer (3.1);
- Containment Cylinders (3.2);
- Flanges Fluted Lower CO (3.3);
- Superior External Flanges (3.4);
- Ball Bearings (3.5);
- Double Flange Stringent Conical Pins with loops (3.6);
- Superior Internal Flanges (3.7);
- Closing cap (3.8)
- Pins loops (3.9);
- Eyebolt (3.10).

The Spacer Cylinder (3.1) is surmounted at the two ends of a Containment Cylinder (3.2); between the Containment Cylinder (3.2) and the Cylindrical Spacer (3.1) are housed a Grooved Flange Outer Lower (3.3) and an Upper Flange Outer (3.4), In the middle of which content is the Outer Ring of the Ball Bearing (3.5). Instead, the inner ring of the Ball Bearing (3.5) is contained between the double flange stringent conical with Through Pins (3.6) fixed to the Tower (2) and the Upper Flange Inner (3.7) which is also fixed to the Tower (2).

At the top of the Rotating Cylinder (3) it Is within the Cap Closure (3.8) that loops Through Pins (3.9) holds all of the components (3.1), (3.2), (3.3), (3.4) and (3.5).

Instead the bottom of the Rotating Cylinder (3) the set of components (3.1), (3.2), (3.3), (3.4) and (3.5) is held together by means Pins Through Hole (3.9).

Finally, in the central Interior of the Closure Cap (3.8) it is positioned an Eyelet (3.10) which Is hooked one end of the Chain of Transmission of Motive Power (4). The other end of the Chain (4) is connected to the spring of Steel (5), which is fixed to the Tree of Transmission (1.4) of the generating machine (Alternator) (1).

The Alternator (1) Is composed of a Casing (1.1), which contains in its interior the Stator (1.2) on which are wound the Turns of Copper. The Stator (1.2) in turn houses in Its interior the Rotor (1.3) on which the magnets are housed. At the center of the Rotor (1.3) is fixed to a Shaft of Transmission (1.4) that passes between one or more Ball Bearings (1.5) which have the function of ensuring the centrality of rotation of the Rotor (1.3) in the same cavity of the Stator (1.2).

The Tower's Support (2) is equipped with Tissues Triangular Reinforcement (2.1) laterally welded at the base of the Tower (2) and the Plate (2.2) of metal alloy that serves as a bottom base with holes to accommodate the Pins (2.3) that will go to anchor solidly the Tower (2) the Alternator (1).

On the Rotating Cylinder (3) are applied Bushings with handkerchiefs Reinforcement Triangular Design Toe (6) for anchoring the tubular Arms (7) which are then fixed by means of other bushings (9) Airfoils (8). Inside the Tubular Arms (7) passes a Cable of Steel (7.1) of safety which reaches the cavity of the Rotating Cylinder (3) and the outer end of the Airfoil (8). The Steel Cable (7.1), fixed at the two ends with the terminals (7.2), has the function of preventing possible dismemberment of the rotating elements In the event of strong gusts of wind, so that in the event of accidental breakage, all rotating elements remain always joined together and not fly off the infrastructure.

In the case of technology WAWTG, the wind acts on the Airfoils (8) putting in motion the Rotating Cylinder (3) that transfers mechanical energy to the Chain of Transmission of the Driving Force (4), connected to one end of the Eyebolt (10/3) - rigidly connected with the Rotating Cylinder (3) - and for the other end of the Steel Spring (5) which is fixed to the Drive Shaft (1.4) of the generating machine (Alternator) (1) and which turns the Rotor (1.3) in the Stator (1.2), thus producing the electricity.

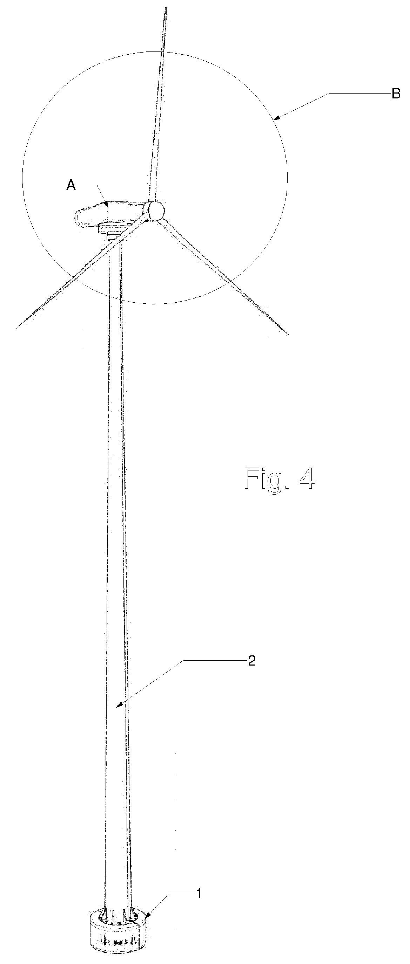

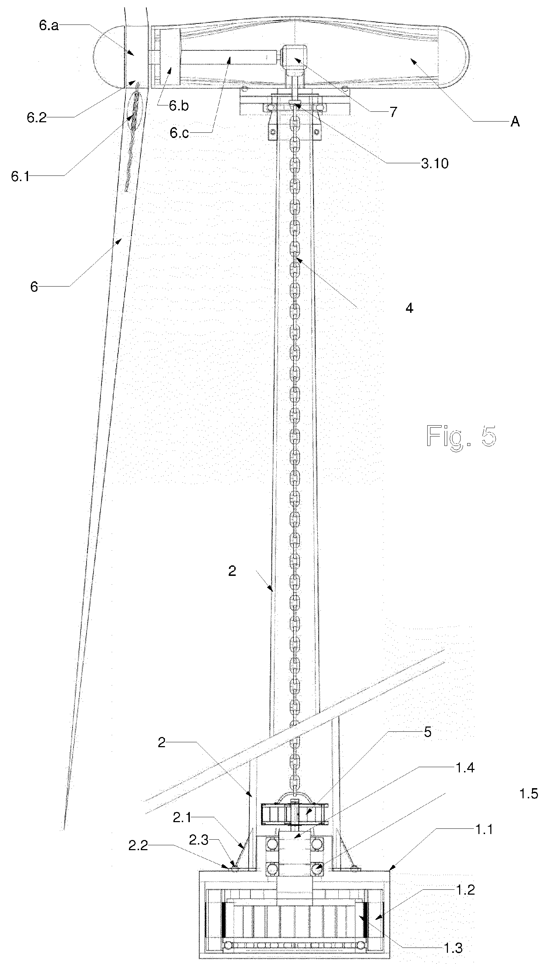

For installations on to Horizontal Axis Wind Turbines (HAWTG), the Transmission System object of this patent is shown In Figures 4 and 5 and is constituted by:
- Transmission Mechanics Angle with Reference to 90 degrees (7)
- Eyebolt (10/3)
- Chain of Transmission (4)
- Spring Steel (5)

Airfoils (6), In addition to being fixed on the Hub (6.a) by means of bolts, are insured by means of a Steel Cable (6.1) of security that from the cavity of the Hub (6.a) reaches the end of the tip of Profile: Wing (6). The Steel Cable (6.1), fixed at the two ends with Terminals (6.2), has the function of preventing possible dismemberment of the rotating elements In the event of strong gusts of wind, so that in the event of accidental breakage, all rotating elements remain always joined together and not fly off the infrastructure. The Hub (6.a) Is supported by Bearings Axial (6.b) crossed from the Tree of Horizontal Transmission (6.c) connected to the transmission Mechanics Corner with Reference to 90 degrees (7). On the Vertical Axis of Mechanical Transmission Angle with Reference to 90 degrees (7) Is positioned an Eyelet (3.10) which is hooked one end of the Chain of Transmission of Motive Power (4). The other end of the Chain of Transmission (4) is connected to the spring of Steel (5) which is fixed to the Tree of Transmission (1.4) Generating Machine (Alternator) (1).

The Alternator (1) Is composed of a Casing (1.1), which contains In its interior the Stator (1.2) on which are wound the turns of copper, the Stator (1.2) in turn houses in its Interior the Rotor (1.3) on which the magnets are accommodated, at the center of the Rotor (1.3) is fixed to a Shaft of Transmission (1.4) that passes between one or more Ball Bearings (1.5) which have the function of ensuring the centrality of rotation of the Rotor (1.3) in the cavity of the Stator (1.2).

The Tower Support (2) is equipped with handkerchiefs of Triangular Reinforcement (2.1) laterally welded at the base of the Tower (2) and the Plate (2.2) of metal alloy that serves as a bottom base with holes to accommodate the Pins (2.3) that will go to anchor solidly the Tower (2) the Alternator (1).

In the case of technology HAWTG, the wind acts on the Andirons Profiles (6) which rotate the Hub (6.a) supported by Thrust Bearing (6.b) that by means of the tree Transmission Horizontal (6.c) transfers energy mechanical rotation of the drive mechanics Angle with Reference to 90 degrees (7) for transmission to the Chain of Transmission (4) connected to one end of the transmission Mechanics Angle with Reference to 90 degrees (7) and the other end of the Spring Steel (5) which is fixed to the Tree of Transmission (1.4) of the generating machine (Alternator) (1) and which turns the Rotor (1.3) in the Stator (1.2) thus producing the electricity.

The set of components 6, 6.a, 6.b, 6.c and 7, are supported by the Spacecraft (A) mounted on top of the Tower (2).

The "Transmission System of Driving Force for Vertical and Horizontal Axis Wind Turbine Generator" object of the present invention provides a number of advantages. First leave the head of the Tower (2) only and exclusively the Wind Rotor (B) and (C) by moving all other components on the ground at the base of the Tower (2). In addition, the "Transmission System of Driving Force for Vertical and Horizontal Axis Wind Turbine Generator " allows the increase in energy production due to the Chain of Transmission (4) and Spring Steel (5) allowing start up empty Wind Rotor (B) and (C), allowing charging of Kinetic Energy so that the torque can easily overcome the resistance of mechanical energy and electrical opposite from the Generating machine electromagnetic induction (Alternator) (1). Finally It allows to employ Generating machine (Alternator) (1) of greater power with equal area swept by the Wind Rotor (B) and (C) and to obtain a more abrupt power curve that passes from the state of start-up to the maximum power in the shortest possible time, also thanks to the acceleration induced by the spring of Steel (5) by means of elastic energy which it absorbed In the start-up phase and released once the torque has exceeded the resistance of mechanical energy and electrical opposite from the machine generating electromagnetic Induction (Alternator) (1).

Another advantage of the Spring Steel (5) Is that it allows booting (cut-In) of the Wind Rotor (B) and (C) to absorb the tear due to the contraction of the chain of transmission of Motive Power (4) and In the stopping phase (cut-off) of the Wind Rotor (B) and (C) to allow the Range Transmission of Driving Force (4) to return to the rest position.

In the description of the "Transmission System of Driving Force for Vertical and Horizontal Axis Wind Turbine Generator" reference was made to installations direct drive but the Transmission System can also be used for system configurations with Multiply Spins (6.e) as shown in Fig. 6 by employing downstream of Spring Steel (5) with a Transmission Mechanics Angular Goal to 90 degrees (7), rigidly connected to a shaft of Horizontal Transmission (6.c) that connects the braking system (6 .d) the System Multiply RPM (6.e) connected to the Machine Electric Generating (Alternator) (1) connected in turn to a Current Transformer (6.f). These four components (Braking System (6.d), System Multiply Spins (6.e), Alternator (1) and Current Transformer (6.f)) were arranged on the ground at the base of the Tower (2) to interior of a box (D). Finally It should be noted that in place of the Chain of Transmission of Motive Power (4) it is possible to use a steel rope, nylon or natural fiber that performs the same function as the Chain of Transmission (4) but with almost zero noise emissions during of exercise.

## Claims

1. "Transmission System of Driving Force for Vertical and Horizontal Axis Wind Turbine Generator" applicable to Vertical Axis windmills (VAWTG) comprising a Rotating Cylinder (3), a Chain of Transmission (4) and a Spring of Steel (5) **characterized in that** allows you to leave the head of the Tower (2) only and exclusively the Wind Rotor (C) and bring to the ground, the base of the Tower (2) all other components (Braking System (6.d), the Spins Multiplier System (6.e), the Alternator (1) and the Current Transformer (6.f) etc.).

2. "Transmission System of Driving Force for Vertical and Horizontal Axis Wind Turbine Generator" applicable to Windmills to Horizontal Axis (HAWTG) comprising an angular Mechanics transmission with Reference to 90 degrees (7), an Eyelet (3.10), a Chain of Transmission (4) and a Spring of Steel (5) **characterized In that** allows you to leave the head of the Tower (2) only and exclusively the Wind Rotor (B) attached to the Spacecraft (a) and to bring to the floor all other components (Braking System (6.d), the Spins Multiplier System (6.e), the Alternator (1) and the Current Transformer (6.f) etc.).

3. "Transmission System of Driving Force for Vertical and Horizontal Axis Wind Turbine Generator" according to claim 1, **characterized in that** the Rotating Cylinder (3) is composed of a Cylindrical Spacer (3.1) topped at the two ends by a Containment Cylinder (3.2); between the Cylinder Containment (3.2) and the Cylindrical Spacer (3.1) are housed a Flange Slotted Lower External (3.3) and a Flange Upper External (3.4), in the middle of which is contained the outer ring of the Ball Bearing (3.5); Instead the inner ring of the Bearing Ball (3.5) Is contained in the Double Flange tightening Conical Pins with loops (3.6) attached to the Tower (2) and the flange Upper Internal (3.7) which Is also attached to the Tower (2); at the top of the Rotating Cylinder (3) It Is within the Cap Closure (3.8) that loops through Pins (3.9) holds all of the components (3.1), (3.2), (3.3), (3.4) and (3.5) while the lower part of the Rotating Cylinder (3) the set of components (3.1), (3.2), (3.3), (3.4) and (3.5) is held together by means Pins Through Hole (3.9).

4. "Transmission System of Driving Force for Vertical and Horizontal Axis Wind Turbine Generator" according to claim 1, **characterized in that** the Tower (2) passes through the Rotating Cylinder (3).

5. "Transmission System of Driving Force for Vertical and Horizontal Axis Wind Turbine Generator" according to claim 1, **characterized by** the use of arms Tubulars (7) in which passes a Cable of Steel (7.1) of safety that reaches the cavity of the Rotating Cylinder (3) and the outer end of the Airfoils (8).

6. "Transmission System of Driving Force for Vertical and Horizontal Axis Wind Turbine Generator" according to claim 2, **characterized by** the use of transmission Mechanical Angle with Reference to 90 degrees (7) that allows the change of direction of transmission by horizontal to vertical, so that the mechanical energy of rotation can arrive, by means of the Chain Transmission (4), the electromagnetic Induction Generating Machine (Alternator) (1).

7. "Transmission System of Driving Force for Vertical and Horizontal Axis Wind Turbine Generator" according to claim 2 **characterized in that** the Profiles Andirons (6) are equipped with of a Steel Cable (6.1) of security that from the cavity of the Hub (6.a) reaches the end of the tip of the Airfoils (6).

8. "Transmission System of Driving Force for Vertical and Horizontal Axis Wind Turbine Generator" according to claim 1 and 2 **characterized In that** the Chain of Transmission of Motive Power (4) transmit the mechanical energy induced by the Rotor Wind (B) and (C) to the generating machine electromagnetic induction (Alternator) (1) placed at the base of the Tower (2); also the Chain of Transmission of Motive Power (4) allows a boot-load of Wind Rotor (B) and (C), allowing charging of kinetic energy so that the torque can easily overcome the resistance of mechanical and electrical opposed by generating machine electromagnetic induction (Alternator) (1); in place of the chain of transmission of Motive Power (4) It is possible to use a steel rope, nylon or natural fiber that performs the same function as the Chain of Transmission (4).

9. "Transmission System of Driving Force for Vertical and Horizontal Axis Wind Turbine Generator" according to claim 1 and 2 **characterized in that** the Spring Steel (5) at startup (cut-in) of the Wind Rotor ( B) and (C) absorbs the tear due to the contraction of the Chain of Transmission of Motive Power (4) and shutting down (cut-off) of the Wind Rotor (B) and (C) allows the Chain of Transmission of the Driving Force (4) to return to the rest position.

10. "Transmission System of Driving Force for Vertical and Horizontal Axis Wind Turbine Generator" according to claim 1 and 2 **characterized by** the fact that It can also be applied to all Aerogenerators both to Horizontal Axis (HAWTG) that Vertical Axis (VAWTG) of any power that use the system multiplies the revolutions (Transmission Gear Box) employing downstream of Spring Steel (5) further Transmission Mechanics Angular with Goal to 90 degrees (7) which allows the change of direction of transmission from vertical to horizontal as shown In Fig. 6.
